# EUROPÄISCHE PATENTSCHRIFT

(11) **EP 0 960 523 B1**
(45) Veröffentlichungstag und Bekanntmachung des Hinweises auf die Patenterteilung: **31.10.2001**
(21) Anmeldenummer: 98907852.2
(22) Anmeldetag: 22.01.1998
(51) Int. Cl.: H04N 1/04

(54) **VERFAHREN ZUR ABTASTUNG VON GERASTERTEN BILDVORLAGEN**
METHOD FOR SCANNING SCREENED MASTER IMAGES
PROCEDE POUR LE BALAYAGE DE MOTIFS TRAMES

(30) Priorität: 17.02.1997 DE 19706160
(43) Veröffentlichungstag der Anmeldung: 01.12.1999
(73) Patentinhaber: Heidelberger Druckmaschinen Aktiengesellschaft, 69115 Heidelberg (DE)
(72) Erfinder: VON WECHGELN, Jörg, Olaf, D-24582 Wattenbek (DE)
(86) Internationale Anmeldenummer: DE9800191
(87) Internationale Veröffentlichungsnummer: WO9836555

(56) Entgegenhaltungen:
- EP-A- 0 301 786
- EP-A- 0 511 754
- PATENT ABSTRACTS OF JAPAN vol. 096, no. 006, 28.Juni 1996 & JP 08 051536 A (RICOH CO LTD), 20.Februar 1996,
- PATENT ABSTRACTS OF JAPAN vol. 097, no. 001, 31.Januar 1997 & JP 08 242364 A (RICOH CO LTD), 17.September 1996,

## Beschreibung

Die Erfindung bezieht sich auf das Gebiet der elektronischen Reproduktionstechnik und betrifft ein Verfahren zur pixel- und zeilenweisen optoelektronischen Abtastung von gerasterten Bildvorlagen.

In der elektronischen Reproduktionstechnik werden in einem Abtastgerät, auch Scanner genannt, durch pixel- und zeilenweise Abtastung einer zu reproduzierenden Bildvorlage mittels eines optoelektronischen Abtastorgans Bildwerte gewonnen und weiterverarbeitet. Das Abtastorgan besteht im wesentlichen aus einer Lichtquelle zur Beleuchtung der abzutastenden Bildvorlage und aus einem optoelektronischen Wandler. Der Scanner kann als Flachbettscanner oder Trommelscanner ausgebildet sein.

In der Praxis müssen oft gerasterte Bildvorlagen abgetastet werden. Das Raster einer abzutastenden Bildvorlage ist durch die Rasterfrequenz (Rasterpunkte/cm) und durch den Rasterwinkel definiert, während die Abtastfeinheit bei der Abtastung der Bildvorlage durch die Abtastfrequenz (Pixel/cm) festgelegt ist, wobei Rasterfrequenz und Abtastfrequenz Ortsfrequenzen sind.

Bei der Abtastung einer gerasterten Bildvorlage entstehen Schwebungsfrequenzen als Summen und Differenzen zwischen der Abtastfrequenz und den Oberwellen der Rasterfrequenz. Niedrige Schwebungsfrequenzen verursachen ein sichtbares Moiré, das von einem Betrachter als störend empfunden wird und somit die Reproduktionsqualität mindert.

Aus den Patent Abstracts of Japan, Vol. 096, No. 006, 28. Juni 1996 und JP 08 051536 A ist bereits ein Verfahren zur Vermeidung von Moiré bei der Vorlagenabtastung bekannt, das durch Bildvergrößerung entsteht. Bei diesem bekannten Verfahren werden die Bildwerte einer Fourier-Transformation zur Erkennung von Moiré unterzogen und das Moiré wird durch eine nachfolgende räumliche Filterung eliminiert.

Aus den Patent Abstracts of Japan, Vol. 097, No. 001, 31. Januar 1997 und JP 08 242364 A ist ein weiters Verfahren zur Vermeidung von Moiré bei der Vorlagenabtastung durch eine räumliche Filterung bekannt.

In der EP 0 511 754 A und der EP 0 301 786 A werden Verfahren zur Entrasterung von gerasterten Vorlagen durch Filterung angegeben.

Aufgabe der vorliegenden Erfindung ist es daher, ein weiteres Verfahren zur Abtastung von gerasterten Bildvorlagen derart zu verbessern, daß störende Moiré-Erscheinungen vermieden oder zumindest stark reduziert werden.

Diese Aufgabe wird durch die im Anspruch angegebenen Merkmale gelöst.

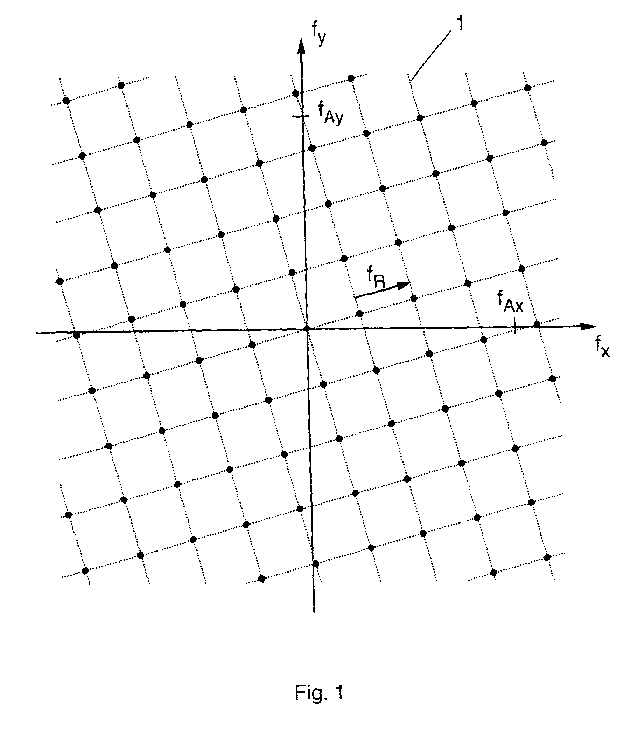

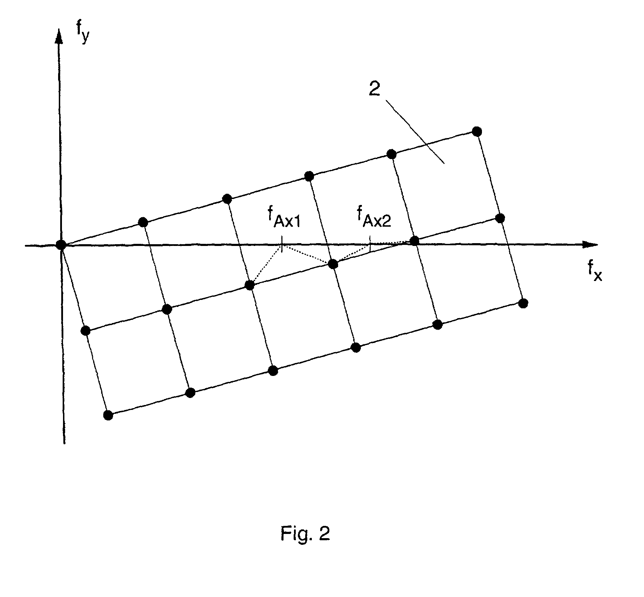

Die Erfindung wird anhand der Figuren 1 und 2 näher erläutert.

Es zeigen:
- Fig. 1: ein Frequenzspektrum und
- Fig. 2: einen vergrößerten Ausschnitt aus dem Frequenzspektrum.

Das erfindungsgemäße Verfahren zur pixel-und zeilenweisen optoelektronischen Abtastung von gerasterten Bildvorlagen wird nachfolgend näher beschrieben. Die Bildvorlagen sind beispielsweise gerasterte Schwarz/Weiß-Vorlagen, gerasterte Farbauszüge oder gedruckte Farbbilder, die keine Grauwerte (Contone) enthalten. Die gerasterten Bildvorlagen können Bereiche mit Text und Bereiche mit gerasterten Bildern (Rasterbereiche) enthalten.

In einem 1. Verfahrensschritt wird in der gerasterten Bildvorlage mindestens ein die Rasterstruktur enthaltender "Rasterbereich" durch Auswertung der Bildwerte festgestellt.

Dazu wird die gerasterte Bildvorlage zunächst in einem Scanner mit einer gröberen Abtastfeinheit als der an sich zur Reproduktion der Bildvorlage erforderlichen Abtastfeinheit abgetastet (Grobscan). Bei dem Grobscan wird gleichzeitig eine Tiefpaßfilterung der abgetasteten Bildinformation durchgeführt. Durch die Tiefpaßfilterung wird erreicht, daß trotz Abtastung der Rasterpunkte als Schwarz/Weiß - Information in der Bildvorlage Grauwerte erzeugt werden. Die Tiefpaßfilterung erfolgt beispielsweise durch eine Unscharfabtastung mit einer vergrößerten Bildpunktblende.
Die Funktionsweise eines Scanners ist allgemein bekannt, so daß sich eine nähere Beschreibung seiner Funktionsweise erübrigt. Beispielsweise kann der Flachbettscanner "TOPAZ" der Firma Linotype-Hell AG verwendet werden.

Falls der Scanner derart kalibriert ist, daß der Bildwert 100% bei Abtastung von "Weiß" und 0% bei Abtastung von "Schwarz" ist, wird ein Vorlagenbereich dann als "Rasterbereich" erkannt, wenn die abgetasteten Bildwerte des Grobscans Grauwerte im Mitteltonbereich von beispielsweise 30% bis 70% sind. Gleichzeitig werden die Grenzen des Rasterbereiches durch Ortskoordinaten markiert.

Der Grobscan der gerasterten Bildlvorlage kann abgebrochen werden, sobald ein "Rasterbereich" in der abgetasteten Bildvorlage festgestellt wurde, wodurch in vorteilhafter Weise Abtastzeit beim Grobscan eingespart wird.

In einem 2. Verfahrensschritt wird der festgestellte "Rasterbereich" der Bildvorlage in dem Scanner mit einer größeren Abtastfeinheit (Feinscan) gegenüber der Abtastfeinheit des Grobscans abgetastet und die Bildwerte des "Rasterbereiches", beispielsweise 512 x 512 Bildwerte, für eine spätere Auswertung gespeichert. Die Eingrenzung der Abtastung auf den "Rasterbereich" der Bildvorlage erfolgt mit Hilfe der zuvor ermittelten Ortskoordinaten.

In einem 3. Verfahrensschritt werden die Bildwerte des "Rasterbereiches, die im Ortsbereich vorliegen, durch eine zweidimensionale Fourier-Transformation (FT), vorzugsweise durch eine Fast-Fourier-Transformation (FFT), in den Frequenzbereich überführt. Solche Fourier-Transformationen sind ebenfalls bekannnt und beispielsweise in Rabiner, L. R.: "Theory And Application Of Digital Signal Processing"; Kap. 6; 1975; ISBN 0-13-914101-4, beschrieben.

Fig. 1 zeigt das Ortsfrequenzspektrum des Rasters der abgetasteten Bildvorlage für einen Rasterwinkel von beispielsweise 15°. Bei Abtastung von gerasterten Farbauszügen mit unterschiedlichen Rasterwinkeln ergibt sich ein entsprechendes Ortsfrequenzspektrum für jeden Rasterwinkel. In den Schnittpunkten der Linien des Gitternetzes (1) liegen die Maxima der Ortsfrequenzen (Oberwellen) der Rasterfrequenz (f_{R}), die durch Frequenzen (fₓ) und (f_{y}) definiert sind. Die Frequenz (fₓ) ist beispielsweise der Zeilenrichtung und die Frequenz (f_{y}) der Vorschubrichtung bei der Vorlagenabtastung im Scanner zugeordnet. Die Rasterfrequenz (f_{R}) gibt die Anzahl der Rasterpunkte je Längeneinheit in Richtung der beiden zueinander orthogonalen Hauptachsen des Rastersystems an. Beispielsweise hat ein sogenanntes 60er Raster eine Rasterfrequenz f_{R} = 60 Rasterpunkte je Zentimeter.

Die zu der Rasterfrequenz f_{R} inverse Größe ist die Rasterweite, die den Abstand zwischen benachbarten Rasterpunkten angibt.

Auf den Frequenzachsen des Ortsfrequenzspektrums sind eine Abtastfrequenz (f_{Ax}) und eine Abtastfrequenz (f_{Ay}) eingetragen. Bei quadratisch angenommen Pixeln, in welche die Bildvorlage bei der Abtastung zerlegt wird, sind die Abtastfrequenzen in Richtung der fₓ-Frequenzachse und der f_{y}-Frequenzachse des Ortsfrequenzspektrums gleich (f_{Ax} = f_{Ay}), so daß später nur ein Quadrant bzw. eine Frequenzachse des Ortsfrequenzspektrums betrachtet werden kann.

In einem 4. Verfahrensschritt werden Rasterwinkel und Rasterweite des Rasters der gerasterten Bildvorlage nach bestimmten Suchkriterien aus dem Ortsfrequenzspektrum ermittelt. Dies kann beispielsweise durch Erkennen der Maxima im Ortsfrequenzspektrum erfolgen, indem jeweils erste Oberwellen untersucht werden. Die Ermittlung von Rasterwinkel und Rasterweite kann vorzugsweise durch eine automatische Analyse des Ortsfrequenzspektrums in einem Scanner oder in einer Workstation erfolgen.

In einem 5. Verfahrensschritt werden aus dem Ortsfrequenzspektrum für den Rasterwinkel und die Rasterweite, die im 4. Verfahrensschritt festgestellt worden sind, geeignete Abtastfrequenzen (f_{Ax} = f_{Ay}) für die eigentliche Abtastung der gerasterten Bildvorlage gesucht.

Dazu zeigt Fig. 2 einen vergrößerten Ausschnitt aus dem Ortsfrequenzspektrum der Fig. 1 entlang der fₓ-Frequenzachse. Geeignete Abtastfrequenzen (f_{Ax}) können in jeder der Gittermaschen (2) des Ortfrequenzspektrums auf der fₓ-Frequenzachse liegen. Die geeignete Abtastfrequenz (f_{Ax}) in einer Gittermasche (2) wird durch eine Abstandsbewertung der zugehörigen Oberwellenfrequenzen (Eckpunkte der Gittermasche) ermittelt. Als geeignete Abtastfrequenz (f_{Ax}) in einer Gittermasche (2) wird beispielsweise diejenige Frequenz ermittelt, die zu den beiden nächstliegenden Oberwellenfrequenzen der betreffenden Gittermasche (2) den gleichen Abstand hat.

In Fig. 2 sind die geeigneten Abtastfrequenzen (f_{Ax1} und f_{Ax2}) in zwei Gittermaschen (2) dargestellt, wobei die Abtastfrequenz (f_{Ax1}) gegenüber der Abtastfrequenz (f_{Ax2}) bevorzugt ist, da sie größere Abstände zu den Oberwellenfrequenzen hat und damit ein Minimum an störendem Moiré erreicht wird. Insbesondere sollte f_{A} > f_{R} sein.

Aus den geeigneten Abtastfrequenzen (f_{Ax}) wird dann diejenige Abtastfrequenz (f_{Ax}) herausgesucht, die in dem für die Abtastung der gerasterten Bildvorlage vorgesehenen Scanner optimal realisierbar ist. Bei einer quadratisch angenommemen Pixelauflösung ist dann f_{Ax} = f_{Ay}.

In einem Flachbettscanner weist das Abtastorgan eine in Zeilenrichtung orientierte Fotodioden-Zeile (CCD-Zeile) als optoelektronischen Wandler und ein Varioobjektiv zur zeilenweisen Abbildung der Bildvorlage auf die Fotodioden-Zeile auf. Die abzutastende Bildvorlage ist auf einem Vorlagentisch angeordnet, der sich senkrecht zur Zeilenrichtung (Vorschubrichtung) bewegt. Bei dem Flachbettscanner wird das Varioobjektiv, mit dem die Bildvorlage zeilenweise auf die Fotodioden-Zeile des Abtastorgans abgebildet wird, entsprechend der optimalen Abtastfrequenz (f_{Ax}) in x-Richtung eingestellt, während die optimale Abtastfrequenz (f_{Ay}) in y-Richtung die Vorschubgeschwindigkeit der Vorlagentisches festlegt.

In einem Trommelscanner ist die abzutastende Bildvorlage auf einer Abtasttrommel aufgespannt, die in Zeilenrichtung (Umfangsrichtung) rotiert. Das Abtastorgan mit einen Photomultiplier als optoelektronischen Wandler bewegt sich in axialer Richtung (Vorschubrichtung) an der Abtasttrommel vorbei. Bei dem Trommelscanner wird die Samplefrequenz bei der Analog/Digital-Wandlung des Bildsignals entsprechend der optimalen Abtastfrequenz (f_{Ax}) in x-Richtung gewählt, während die optimale Abtastfrequenz (f_{Ay}) in y-Richtung die Vorschubgeschwindigkeit des Abtastorgans entlang der Abtasttrommel festlegt.

In einem 6. Verfahrensschritt werden dann die zu reproduzierende gerasterte Bildvorlage mit den zuvor ermittelten optimalen Abtastfrequenzen (f_{Ax}; f_{Ay}) bzw. Abtastfeinheiten in Zeilen- und Vorschobrichtung nochmals in dem Scanner als Feinscan abgetastet und die dabei gewonnenen nunmehr Moiré-freien Bildwerte weiterverarbeitet.

Wenn die gerasterte Bildvorlage beispielsweise die vier Farbauszüge eines Farbsatzes sind, werden die einzelnen Farbauszüge nacheinander mit den für den jeweiligen Farbauszug als optimal ermittelten Abtastfrequenzen als Feinscan abgetastet und die dabei gewonnenen Moiré-freien Bildwerte durch eine Tiefpaßfilterung digital entrastert. Aus den entrasterten Bildwerten werden dann die Halbton-Farbauszüge (Contone-Auszüge) berechnet. Alternativ können die Moiré-freien Bildwerte ohne eine entsprechende Tiefpaßfilterung auch als Linework weiterverarbeitet werden.

## Patentansprüche

1. Verfahren zur pixel-und zeilenweisen optoelektronischen Abtastung von gerasterten Bildvorlagen mit einem Abtastgerät, **dadurch gekennzeichnet, daß** vor der eigentlichen Vorlagenabtastung
- in der gerasterten Bildvorlage mindestens ein das Raster enthaltender Vorlagenbereich (Rasterbereich) festgestellt wird,
- die im Ortsbereich vorliegenden, durch Abtastung erhaltenen Bildwerte des festgestellten Rasterbereiches der Bildvorlage durch eine zweidimensionale Fourier-Transformation in den Frequenzbereich als Ortsfrequenzspektrum überführt werden,
- aus dem Ortsfrequenzspektrum Rasterweite und Rasterwinkel des Rasters der Bildvorlage festgestellt werden,
- für den festgestellten Rasterwinkel und die festgestellte Rasterweite des Rasters der Bildvorlage die für eine Moiré-freie Abtastung optimalen Abtastfrequenzen (f_{Ax}; f_{Ay}) aus dem Ortsfrequenzspektrum ermittelt werden,
- die die Abtastfeinheit bestimmenden optimalen Abtastfrequenzen (f_{Ax}; f_{Ay}) an dem Abtastgerät eingestellt werden und
- die gerasterte Bildvorlage mit den eingestellten optimalen Abtastfrequenzen (f_{Ax}; f_{Ay}) zur Gewinnung der für die Reproduktion der gerasterten Bildvorlage erforderlichen Bildwerte abgetastet wird.

## Claims

1. Method for pixel-by-pixel and line-by-line optoelectronic scanning of halftone copy with a scanning device, **characterized in that** prior to the actual scanning of the copy
- at least one region containing the screen pattern (screen region) is identified within the halftone copy,
- the image values, present in the spatial region and obtained by scanning, of the screen region identified within the halftone copy are transformed by a two-dimensional Fourier transformation into the frequency range as spatial-frequency spectrum,
- screen width and screen angle of the halftone copy are determined from the spatial-frequency spectrum,
- for the determined screen angle and the determined screen width of the halftone copy, the optimal scanning frequencies (fAx: fAy) for moiré-free scanning are determined from the spatial-frequency spectrum,
- the optimal scanning frequencies (fAx; fAy) determining fineness of scanning are set on the scanning device and
- the halftone copy is scanned with the set optimal scanning frequencies (fAx; fAy) to obtain the image values required for the reproduction of the halftone copy.

## Revendications

1. Procédé de balayage optoélectronique, pixel par pixel et ligne par ligne de modèles d'images tramées à l'aide d'un appareil de balayage,
**caractérisé en ce qu'**
avant l'opération de balayage proprement dite,
- on détermine dans le modèle d'image tramée, au moins une zone de modèles (zone de trame) contenant la trame,
- on transfère les valeurs d'image obtenues par balayage de la zone tramée déterminée dans le modèle d'image, vers la zone locale, par une transformation de Fourier à deux dimensions dans la plage des fréquences, comme spectre de fréquence local,
- à partir du spectre de fréquence local, on détermine la portée et l'angle de la trame du modèle d'image,
- pour l'angle de trame déterminé et pour la portée de trame déterminée dans la trame du modèle d'image on détermine les fréquences de balayage optimales (f_{Ax} ; f_{Ay}) pour un balayage sans Moiré, à partir du spectre de fréquence local,
- on règle les fréquences de balayage optimales (f_{Ax} ; f_{Ay}) définissant la finesse du balayage sur l'appareil de balayage et
- on balaye le modèle d'image tramée aux fréquences de balayage optimales réglées (f_{Ax} ; f_{Ay}) pour obtenir les valeurs d'image nécessaires à la reproduction du modèle d'image tramée.
